# EUROPEAN PATENT APPLICATION

(11) **EP 1 277 993 A1**
(43) Date of publication of application: **22.01.2003**
(21) Application number: 00975054.8
(22) Date of filing: 26.10.2000
(51) Int. Cl.: F16J 9/06, B23P 15/08, B21F 45/00, B21F 11/00, B21F 35/04, B21D 11/06

(54) **MULTIPIECE PISTON RING AND METHODS AND DEVICES FOR THE PRODUCTION THEREOF**

(30) Priority: 13.01.2000 RU 2000100591; 28.06.2000 RU 2000116557; 31.07.2000 RU 2000120064
(71) Applicant: Alexandrov, Andrei Alexeevich, Magnitogorsk, 455000 (RU); Nemets, Rusaam Samuilovich, Moscow, 115551 (RU); Stolyarova, Elena Nikolaevna, Moscow, 115230 (RU); Kartashov, Leonid Maximovich, Moscow, 113587 (RU); Matvievskaya, Ljudmila Ivanovna, Moscow, 119270 (RU)
(72) Inventor: Alexandrov, Andrei Alexeevich, Magnitogorsk, 455000 (RU); Nemets, Rusaam Samuilovich, Moscow, 115551 (RU); Stolyarova, Elena Nikolaevna, Moscow, 115230 (RU); Kartashov, Leonid Maximovich, Moscow, 113587 (RU); Matvievskaya, Ljudmila Ivanovna, Moscow, 119270 (RU)
(74) Representative: Hamilton, Alistair
(86) International application number: RU0000421
(87) International publication number: WO01051833

(57) **Abstract**

The present invention relates to the mechanical engineering but namely : to the propulsion engineering. A compound piston ring for internal combustion engine is characterized in that a width **B** and b and thickness **H** and **h** of metallic bands used for manufacturing the plate-like rings and the tangential expanders are in the following correlations: **b/B** = 0,45 ± ± 0,15 and **h/H** = 0,85±0,15. A method for manufacturing plate-like twisted rings for compound piston ring is characterized in that after the polishing the spiral is taken away from the mandrel and the spiral surface is prepared (is cleaned, etched and degreased) before the step of chromium-plating, further the spiral is based on the mandrel of given diameter, the step of chromium-plating is carried out along the external diameter, further the spiral is taken away from the mandrel and is dehydrogenated at a temperature up to 250° C but before the step of spiral cutting into the separate rings the spiral is preliminarily based on a mandrel or in sleeve of given diameters. A method for manufacturing of the tangential expanders for compound piston ring is characterized in that after the step of forming serpentine spring coils the step of gradual decreasing of coils step value is carried out with the step of permanent fixing places of bend but the step of thrust shoulders forming is carried out with a subsequent decreasing coils of this step to a value which is no more than 5S, wherein the value S is the band width when the serpentine spring is formed of this band. A device for manufacturing serpentine springs characterized in that it is provided with an immovable cam-eccentric disposed inside of the roller with the pins and with mechanisms for a restraint of motion of the pins, the mechanisms are carried out in the form of copying guides disposed on the both sides from the guide roller in course of the band feeding, the surfaces of copying guides are equidistant to the cam-eccentric surface and the pins are made to move in the radial direction and are mounted being capable of engaging with the cam-eccentric and the mechanisms for their motion restraint. The technical result of the invention realization consists in that there is solved the problem of increasing the effectiveness of compound piston ring by means of providing a guaranteed adjacency of plate-like rings both in the axial direction and the radial direction.

## Description

### Technical Field

The present invention relates to the mechanical engineering but namely: to the propulsion engineering and it may find its application in case of design and production of compound piston rings and their separate parts which are both intended for internal combustion engines and for compressors or other piston-type machines.

### Background of the Invention

There are known constructions of compound piston rings that comprise plate-like twisted rings and a solid-bent tangential expander which are made of metallic bands of rectangular cross-section with rounded edges (see the RU Patent # 2028485).

These constructions of compound piston rings do not completely meet the requirements made to them since the plate-like rings and the tangential expander are made of metallic bands which are wound on a rib edgewise and in the direction of their thickness do not always correspond with respect to a stiffness (an elasticity) relative to a force which is transferred from the tangential expander to the plate-like rings through end detents.

Besides the tangential expander is made of metallic band with an excessive stiffness and for that reason the force is not transferred to the plate-like rings by means of all the end detents. It decreases a wear resistant of end detents and at the same time it does not provide with the adjacency of plate-like rings to a cylinder wall when the piston has the reciprocal movement in the internal combustion engine.

The closest technical solution relative to the declared invention that is taken as a prototype of the declared technical solution is a compound piston ring for internal combustion engine comprising a plate-like twisted rings and a spring solid-bent tangential expander which are made of metallic bands of rectangular cross-section with rounded edges (see the USSR Inventor's Certificate # 1313068).

Such a constructive implementation of compound piston ring completely meets the requirements made in case of its use in process of operation but besides necessary correlations of metallic bands with respect to their width and thickness which represent a material for manufacturing the plate-like rings and solid-bent tangential expander do not always correspond with respect to optimum stiffness relative to the force which is transferred from the tangential expander to the plate-like rings through the end detents and it does not provide a guaranteed adjacency of the plate-like rings to a cylinder wall.

There is known a method for manufacturing plate-like twisted rings which are intended for making of compound piston ring. This method is taken as a prototype of declared invention and comprises the step of winding of spiral made of steel band, the step of its basing on a mandrel of given diameter, the step of spiral fastening along end-walls, the step of the spiral thermal fixing, the steps of the spiral polishing and its chromium-plating as well as the step of the spiral cutting into separate rings (see the USSR Inventor's Certificate # 311720).

However, in case of method in question in process of the thermal fixing the spiral and the mandrel are covered by oxide layer and besides a current installing is disturbed and it has an effect on the quality of chromium-plating since the layer of chromium has an irregular thickness. Besides in case of polishing waste products of polishing are crowded into gaps between coils of the spiral on the mandrel and it also has an effect on the quality of chromium-plating.

There is known a method for manufacturing the tangential expanders for compound piston ring. This method is taken as a prototype of the declared invention and comprises the step of forming coils of serpentine spring, a thrust shoulders and a V-type profile, the step of winding of spiral made of this profile and the simultaneous step of this spiral hardening on the mandrel, the step of measuring spiral separating from the winding spiral, the step of separated spiral reloading on another mandrel and the step of its tempering with the subsequent step of the spiral chopping into the separate expanders with the simultaneous step of forming a lock device of the tangential expander by means of ends of horizontal shelves of the spiral profile coils (see the USSR Inventor's Certificate # 1533091).

However, in case of method in question concerning a production of tangential expander there is no capability to make a step between the coils of serpentine spring which is less than 5,5S wherein the parameter S is the width of bent band, but a radius (R) of bend is equal to S and it limits the capability of obtainment of the tangential expanders with more pliable spring characteristic.

There is also known a device for manufacturing of serpentine springs. This device is taken as a prototype of the declared invention and comprises a body with profiling rollers which are mounted on spindles in said body, one of rollers is provided with pins oriented in the radial direction and said device has also a guide roller (see the USSR Inventor's Certificate #1533091).

The technical solution in question has a negative aspect and said aspect consists in that there is a capability of manufacturing a serpentine spring with a limited interval of its step and in the end it adversely effects upon the characteristics of its strength and stiffness.

There is known a device for manufacturing a tangential expander profile and for its winding into spiral with the simultaneous step of hardening. This device is taken as a prototype for the declared technical solution and comprises a body, on which by means of bearings a rotating mandrel is mounted, and a lever on which a flexible roller is mounted with a friction coupling that is built into said roller and this friction coupling has a cinematic constraint with the rotating mandrel by means of unit of pinions. The known device comprises also a puller (see the RU Patent #2146178).

The drawback of the device in question is in that a clamping roller has no adjustment in the radial direction and it is inflexibly fastened upon a bracket. For this reason it requires the device readjustment in case of change of the profile height and the diameter of wound spiral.

### Summary of the Invention

The problem of increasing the effectiveness of compound piston ring by means of providing a guaranteed adjacency of plate-like rings both in the axial direction and the radial direction is assumed as a basis of the present invention.

Besides the problem of invention in question is also a creation of more exact and more effective methods for manufacturing plate-like twisted rings and tangential expanders for a compound piston ring providing the high exactness and stability of quality of geometrical parameters of the piston ring components which are made by means of proposed methods.

Besides, the problem also consists in that parallel with optimization of compound piston ring construction and methods of its components manufacturing it is necessary to obtain a capability of providing with a simplification of device constructions for manufacturing serpentine springs and profiles of tangential expanders saving their functional characteristics and high level of effectiveness.

The formulated problem or the formulated technical result which is proposed to obtain from the realization of the present invention is achieved by means of the following:
- a width **B** and **b** and thickness **H** and **h** of metallic bands used for manufacturing the plate-like rings and the tangential expanders are in the following correlations: **b/B** = 0,45 ± ± 0,15 and **h/H** = 0,85±0,15 in the compound piston ring for internal combustion engine comprising the plate-like twisted rings and the spring solid-bent tangential expander which are made of metallic bands of rectangular cross-section with rounded edges;
- at the same time the end detents of the tangential expander may be made in such a manner that they are inclined at angle α with respect to radial supporting shelves and this angle α is in the range of 95° to 120°;
- in the method for manufacturing plate-like twisted rings for compound piston ring comprising the step of winding of spiral made of steel band, the step of its basing on the mandrel of given diameter with the step of spiral fastening along end-walls, the step of the spiral thermal fixing, the steps of the spiral polishing, chromium-plating and its cutting into the separate rings and after the polishing the spiral is taken away from the mandrel and the spiral surface is prepared (is cleaned, etched and degreased) before the step of chromium-plating, further the spiral is based on the mandrel of given diameter, the step of chromium-plating is carried out along the external diameter, further the spiral is taken away from the mandrel and is dehydrogenated at a temperature up to 250⁰C but before the step of spiral cutting into the separate rings the spiral is preliminarily based on a mandrel or in a sleeve of given diameters;
- in the method for manufacturing of the tangential expanders for compound piston ring. comprising the step of forming coils of serpentine spring, thrust shoulders and a V-type profile, the step of winding of spiral made of this profile and the simultaneous step of this spiral hardening on the mandrel, the step of measuring spiral separating from the winding spiral, the step of separated spiral reloading on another mandrel and the step of its tempering with the subsequent step of the spiral chopping into the separate expanders with the simultaneous step of forming a lock device of the tangential expander by means of bending the ends of horizontal shelves of spiral profile coils, further after the step of forming serpentine spring coils the step of gradual decreasing of coils step value is carried out with the step of permanent fixing places of bend but the step of thrust shoulders forming is carried out with a subsequent decreasing coils of this step to a value which is no more than 5S, wherein the value S is the band width when the serpentine spring is formed of this band;
- as well as in the method for manufacturing tangential expanders a profile along the step and a curvature of winding spiral made of said profile are fixed on a rotating bush of necessary diameter in number which is no less than two coils in process of heating and cooling on hardening and an the same time a compact adjacency of profile to the bush in process of hardening and its separation with the travel of coils of spiral of profile in the axial direction along the rotating bush and the rotating supporting mandrel are implemented by means of flexible roller with leading linear velocity up to 50% with respect to the bush and the supporting mandrel velocity and further the coils of profile spiral are freely moved in the axial direction along the bush and the supporting mandrel;
- besides, the hardened spiral of given length is separated and reloaded for subsequent tempering the step of which is simultaneously implemented with the steps of winding and hardening.

The formulated technical result may be also obtained by means of the following:
- a device for manufacturing serpentine springs, comprising a body with profiling rollers mounted on spindles in said body, one of the rollers is provided with pins oriented in the radial direction, and a guide roller, is provided with an immovable cam-eccentric, disposed inside of the roller with the pins, and with mechanisms for a restraint of motion of the pins, said mechanisms are carried out in the form of copying guides disposed on the both sides from the guide roller in course of the band feeding, the surfaces of copying guides are equidistant to the cam-eccentric surface and the pins are made being capable of moving in the radial direction and are mounted being capable of engaging with the cam-eccentric and the mechanisms for their motion restraint;
- in the device for manufacturing a tangential expander profile and for its winding into spiral with the simultaneous step of hardening, comprising a body, on which by means of bearings a rotating mandrel is mounted, and a lever, on which a flexible roller is mounted with a friction coupling that is built into said roller, this friction coupling has a kinematical constraint with the rotating mandrel by means of unit of pinions, there is also a puller and a quick-detachable bush is made of heat isolating material and mounted on a rotating mandrel but the lever on which there is mounted a flexible roller is made rotatable and spring-loaded and besides the puller is carried out with an end spiral surface having a step which is no less than the height h of winding spiral profile.

### Brief description of the drawings

For better understanding of the invention the best versions of its embodiment are below-mentioned wherein:
Fig 1 shows a cross-section of the compound piston ring which is in assembled state with a solid-bent tangential expander of U-type shape;
Fig. 2 is a perspective representation of a part of compound piston ring, carried out in accordance with Fig.1;
Fig. 3 shows a cross-section of the compound piston ring which is in assembled state with a solid-bent tangential expander of W-type shape and is in operation state in the piston groove;
Fig.4 is a perspective representation of a part of compound piston ring, carried out in accordance with Fig.3;
Fig. 5 shows a cross-section of the compound piston ring which is in assembled state with a solid-bent tangential expander of T-type shape and is in operation state in the piston groove when radial supporting shelves are inclined with respect to one another in free state;
Fig.6 is a perspective representation of a part of compound piston ring, carried out in accordance with Fig.5;
Fig 7 shows a cross-section of the compound piston ring which is in assembled state with a solid-bent tangential expander of V-type shape when a gap between the radial shelves is no more than a thickness of metallic band;
Fig.8 is a perspective representation of compound piston ring, carried out in accordance with Fig.7;
Fig.9 shows a spiral which is based on a mandrel of given diameter;
Fig.10 shows the spiral which is in axonometric projection and in free state;
Fig. 11 shows a device for decreasing a wound serpentine spring step;
Fig. 12 shows a winding of flat serpentine spring;
Fig. 13 is a section A ― A of Fig.12;
Fig. 14 shows the decrease of value of the flat serpentine spring step;
Fig. 15 shows the decrease of value of the flan serpentine spring step with a simultaneous forming of thrust shoulders;
Fig.16 is a section B ― B of fig.15;
Fig. 17 shows a forming of the V-type profile of serpentine spring;
Fig. 18 is a section B - B of fig.17;
Fig.19 shows a winding of the V-type profile into spiral;
Fig. 20 is a section Γ-Γ of fig.19;
Fig. 21 shows a part of tangential expander with a lock device after carrying out the step of chopping the spiral into the separate expanders;
Fig.22 is a view 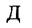 of Fig.21;
Fig. 23 shows a general view of the device in its section for tangential expander profile manufacturing and for its winding into spiral with simultaneous accomplishment of the step of hardening;
Fig.24 is a view E of the general view with accordance to the Fig.23;
Fig.25 is a general view of the arrangement of press tool unit.

### The best versions of the invention embodiment

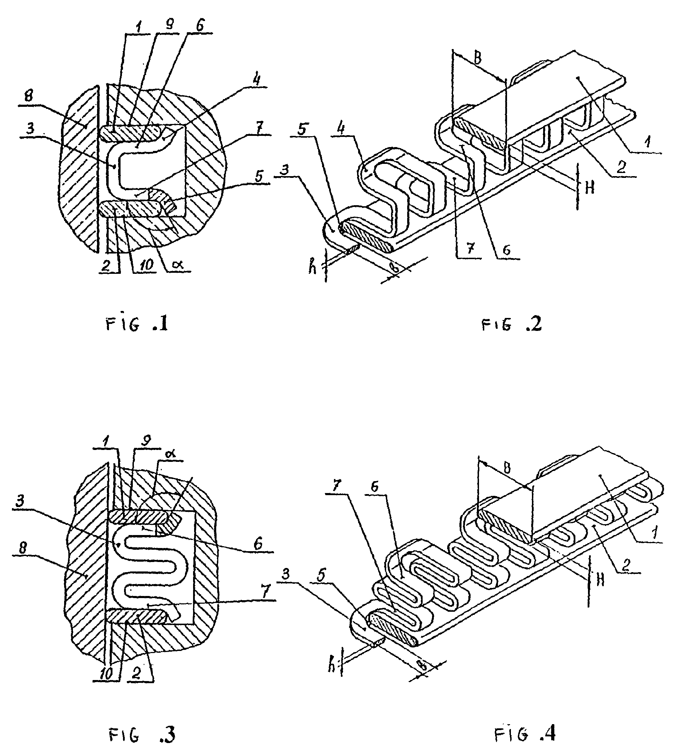

The compound piston ring for internal combustion engine comprises plate-like twisted rings 1 and 2 and a spring solid-bent tangential expander 3 which are made of metallic bands of rectangular cross-section with rounded edges in accordance with ratios b/B = 0,45 ± 015 and h/H = 0,85 ± 015. Besides end detents 4 and 5 pressing the plate-like twisted rings are carried out inclined at angle α with respect to supporting shelves 6 and 7 varying in the range of 95° to 120° (see Figures 1 to 8).

Depending on a piston groove height, a process of internal combustion (a diesel engine process, a carburetor engine process and others) and a rotational speed of engine crankshaft it is possible to have various combinations of stack (a number) of plate-like rings in the compound piston ring but a correlation between the width and thickness of bands which represent a material for the plate-like rings manufacturing and the width and thickness of band which represents a material for the solid-bent tangential expander manufacturing must be corresponded to values b/B = 0,45 ± ± 015 and h/H = 0,85± 015.

The compound piston ring may operate by the following manner. In the internal combustion engine the piston has a reciprocation, the plate-like twisted rings 1 and 2 are pressed by means of the end detents 4 and 5 and the radial supporting shelves 6 and 7 of solid-bent tangential expander 3 in the radial direction to the wall 8 of cylinder but in the axial direction they are retained against the end-wall surfaces 9 and 10 of piston groove.

The method for manufacturing the plate-like twisted rings for compound piston ring is implemented in the following sequence.

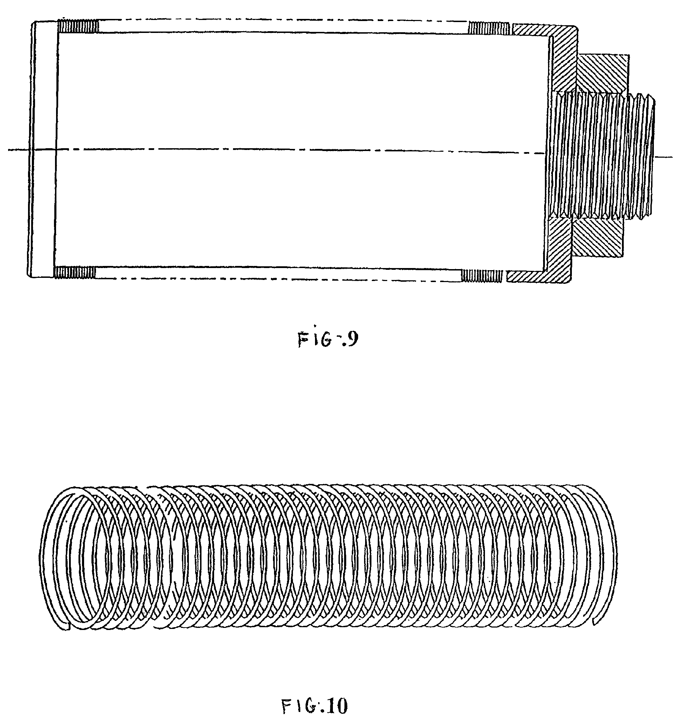

The wound spiral is based on the mandrel of given diameter in such a manner that by the internal diameter the coils of spiral are closely retained against the mandrel surface but in the axial direction they are snug against each other and are pressed from the end-walls (see Fig.9).

The spiral is thermally fixed on the mandrel at a temperature of 350° to 500°C. The thermally fixed spiral is polished on the mandrel.

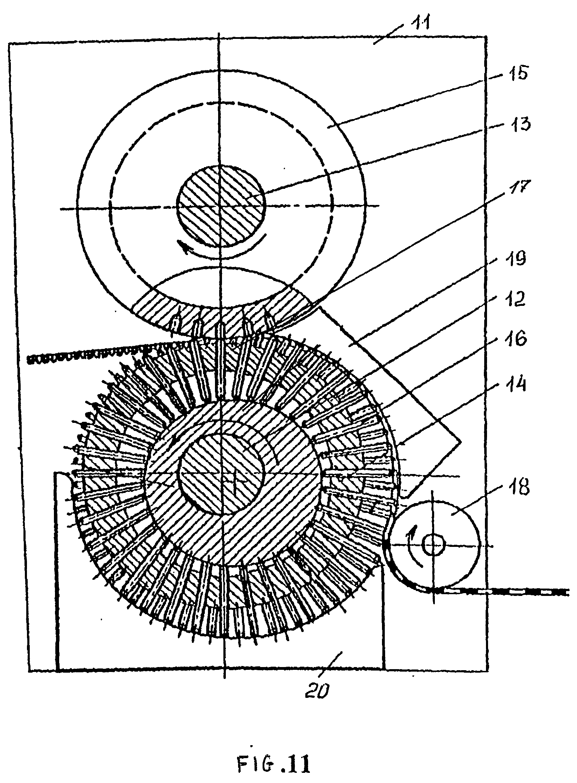

The polished spiral is taken off from the mandrel (see Fig.10), this spiral is cleaned from oxide layer and from polishing waste products in places of contact, further said spiral is degreased and it is again based on the mandrel of given diameter. The mandrel is preliminarily cleaned in the places of its contact with the spiral.

The spiral is chromium-plated on the mandrel.

The chromium-plated spiral is taken off from the mandrel, further it is washed off the electrolyte and is dehydrogenated in a furnace at a temperature up to 250°C.

The chromium-plated spiral is cut into the separate rings. The spiral is preliminarily based on a mandrel or in a sleeve of given diameter depending on the methods of cutting.

The method for manufacturing of tangential expanders for compound piston ring is carried out by the following manner.

The serpentine spring which is made of flattened band of rectangular cross-section is wound with its fixing by step "t" (see Figures 12 and 13).

Further the value "t₁" of serpentine spring step is gradually decreased with its fixing on the movable pins of profiling roller by means of decreasing a circumferential step of movable pins (see Figures 11 and 14).

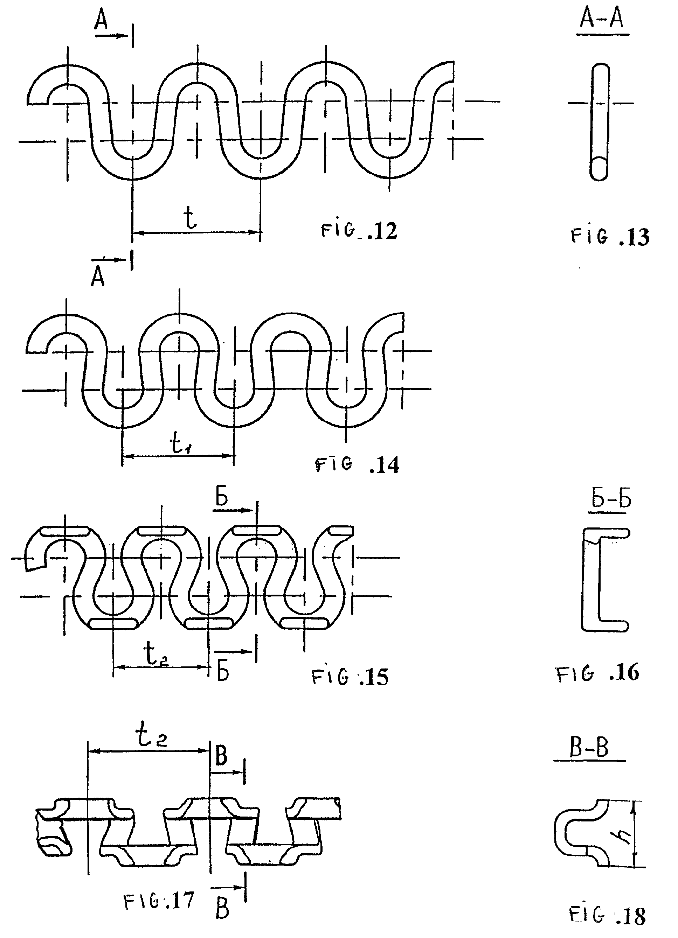

The final decreasing of the serpentine spring step value to its value"tₐ" < "5S" wherein the value "S" is the width of flattened band and is equal to the radius of bend is simultaneously carried out with the thrust shoulder forming (see Figures 15 and 16).

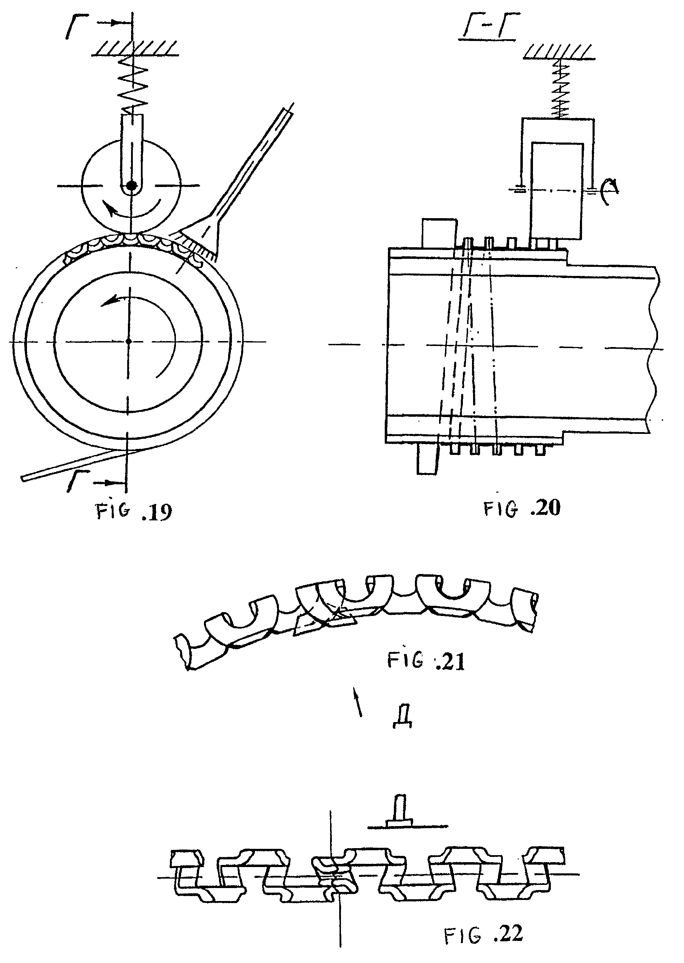

The V-type profile which is made of serpentine spring is formed with the fixing by step "tₐ" (see Figures 17 and 18) and the spiral which is made of V-type profile is wound with its simultaneous hardening on a rotating bush (see Figures 19, 20) and, besides, on the rotating bush of necessary diameter the profile of winding spiral is fixed by step and curvature in number of coils which is no less than two coils in process of heating and cooling , at the same time a compact adjacency of profile to the bush in process of hardening and its separation with the travel of spiral coils made of profile in the axial direction along the rotating bush and along the rotating supporting mandrel are carried out by means of flexible roller with leading linear velocity up to 50% with respect to the bush and the supporting mandrel velocity but further the spiral of determined length is cut off without of its rotation halt and is reloaded on the mandrel on which the spiral is tempered in a shaft furnace at a temperature up to 600°C.

The tempered spiral is chopped into the separate tangential expanders with simultaneous forming a lock device by means of bending the ends of the horizontal shelves of the tangential expander profile (see Figures 21 and 22).

The device for manufacturing serpentine springs (see Fig.11) and for decreasing the step of wound serpentine spring comprises a body 11 with driving pins 12 and 13 on which the profiling rollers 14 and 15 are fastened. Movable pins 16 are disposed on the lower roller but corresponding reciprocal holes are carried out in the upper roller 15. A cam-eccentric 17 is mounted inside of the lower profiling roller 14. To the right of the lower profiling roller 14 there is disposed a guide roller 18 on both sides of which there are fastened mechanisms for restraint the motion of pins 19 and 20.

The movable pins 16 travel in the radial direction and are mounted being capable of engaging with the cam-eccentric 17 and with the mechanisms for restraint the motion of pins 19 and 20.

The device operates by the following manner. The serpentine spiral with the step "t" is passed under the guide roller 18 and is set on the ends of movable pins 16. At the same time the circumferential step between the axes of the extended pins 16 along their external surface must be equal to the step "t" of serpentine spring. It is obtained by means of the immovable eccentric 17 and it corresponds to the maximum extension of the pins 16 with respect to the surface of the profiling roller 14 measured by the external diameter. The profiling roller 14 rotating uninterruptedly feeds the serpentine spring set on the pins 16 into the mechanism for restraint the motion of the pins 19 the operating surfaces of which are equidistant ones with respect to the cam-eccentric 17. The mechanism for restraint the motion of the pins 19 moves gradually the pins 16 in the radial direction with the serpentine spring set on them continuously retaining them against the surface of the cam-eccentric 17. At the same time the circumferential step between the axes of the pins 16 along their external surface is decreased and by means of this action the initial step "t" of the serpentine spring is decreased. From the mechanism for restraint the motion of the pins 19 the serpentine spring is receipted in the next analogous device in the gap between the profiling rollers 14 and 15 which are rotating towards each other wherein the final step decrease is carried out but at the same time the thrust shoulders are formed.

The serpentine spring with finally decreased step and with the formed shoulders gets off the pins 16 of the profiling roller 14 but the pins 16 are retained against the surface of the immovable cam-eccentric 17 by means of mechanism for restraint the motion of the pins 20.

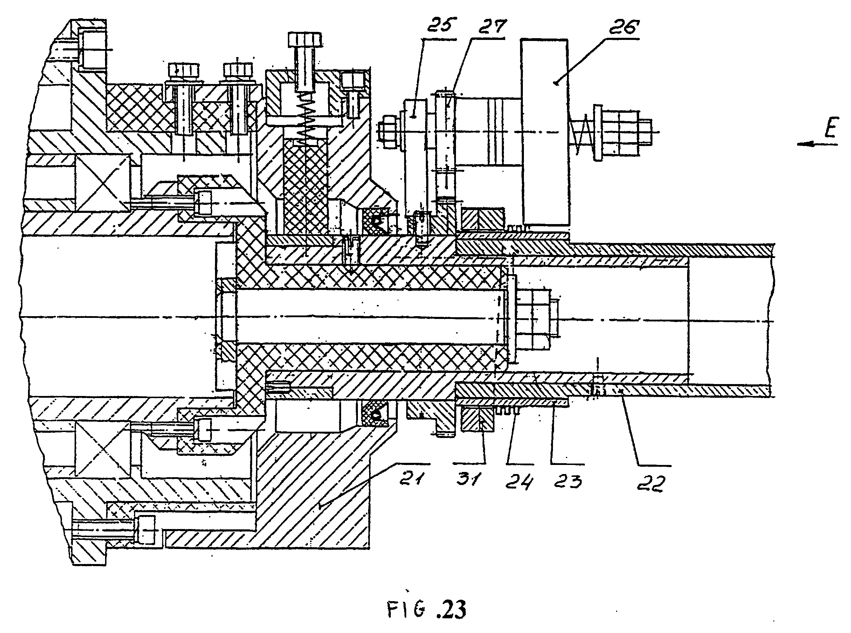

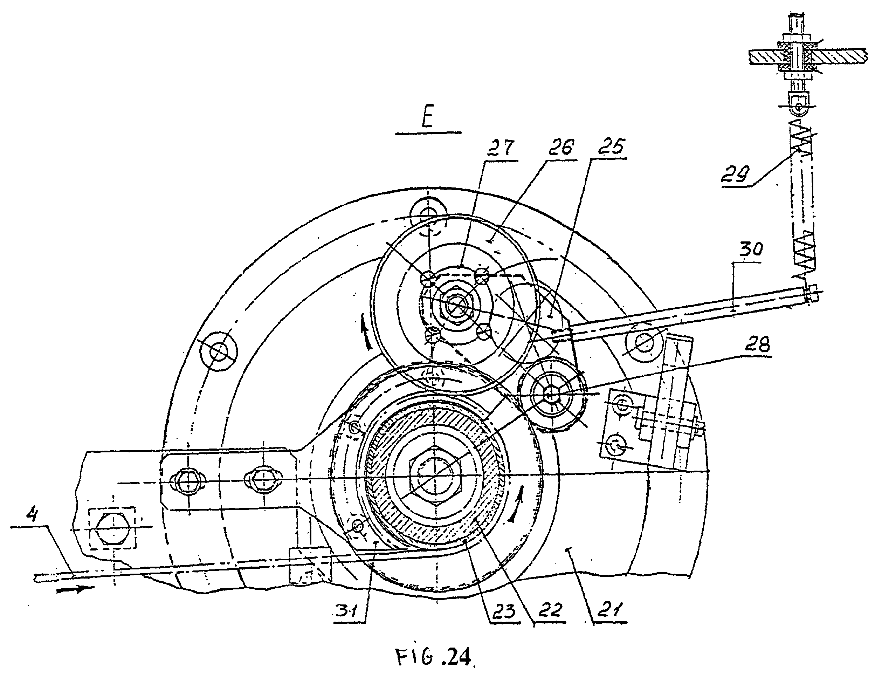

The device for profile manufacturing and for its winding into the spiral with simultaneous hardening (see Figures 23 and 24) comprises a body 21 on which by means of bearings there is fastened a supporting mandrel 22 the rotation of which is accomplished from the main device drive which is disposed in the body 21.

A bush 23 is attached to the supporting mandrel and the bush 23 fixes the curvature of winding spiral made of profile 24 in process of hardening. At the same time the bush 23 may be easy substituted and is made of heat isolating material.

On a turning lever 25 there is located a flexible roller 26 with a friction coupling which is built in it and has a cinematic linkage to the bush 23 and to the supporting mandrel 22 by means of unit of pinions 27 and these pinions are disposed on the lever 25. The turning lever 25 is fastened to an immovable axle 28 of the body 21.

The force of the flexible roller 26 pressure to the winding spiral made of profile 24 is adjusted by means of spring 29 which is attached to the turning lever 25 through a link 30.

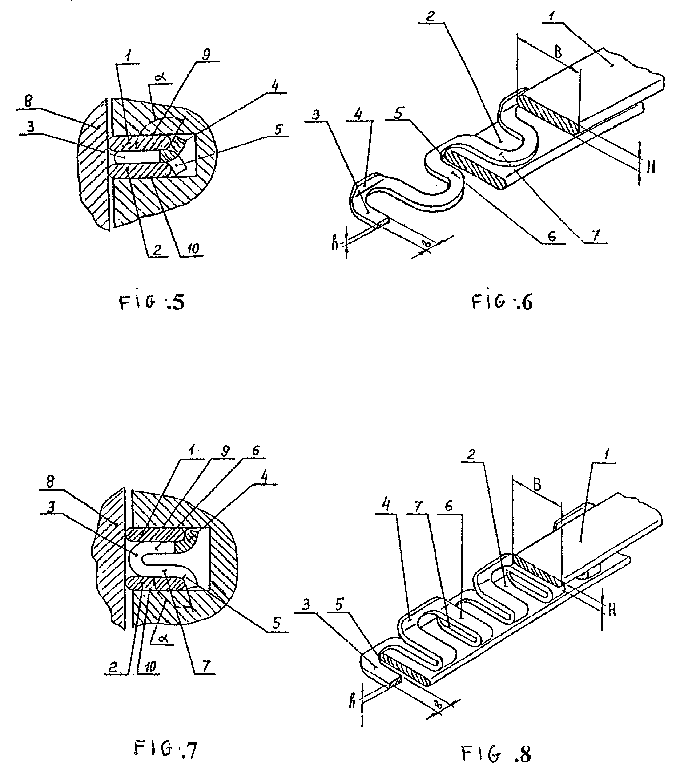

The axial motion of winding spiral along the bush 23 is carried out by means of immovable puller 31 having a spiral end surface with a step which is no less than the height "h" of profile of winding spiral (see Fig.8).

The proposed device operates by the following manner.

The profile heated to the temperature of hardening is wound into the spiral of profile 24 (see Figures 23 and 24) with simultaneous cooling on the rotating bush 23 which is attached to the supporting mandrel 22. Further the wound spiral is moved by means of immovable puller 31 by its spiral surface along the bush 23. At the same time the close adjacency of the spiral of profile 24 to the bush 23 is provided by means of flexible spring-loaded roller 26 the linear velocity of which is more up to 50% than the linear velocity of bush 23. The same flexible roller separates the coils of wound spiral 24 and pushes them onto the supporting mandrel 22 whereon the spiral is accumulated to the given length and is chopped off without of the device operation halt.

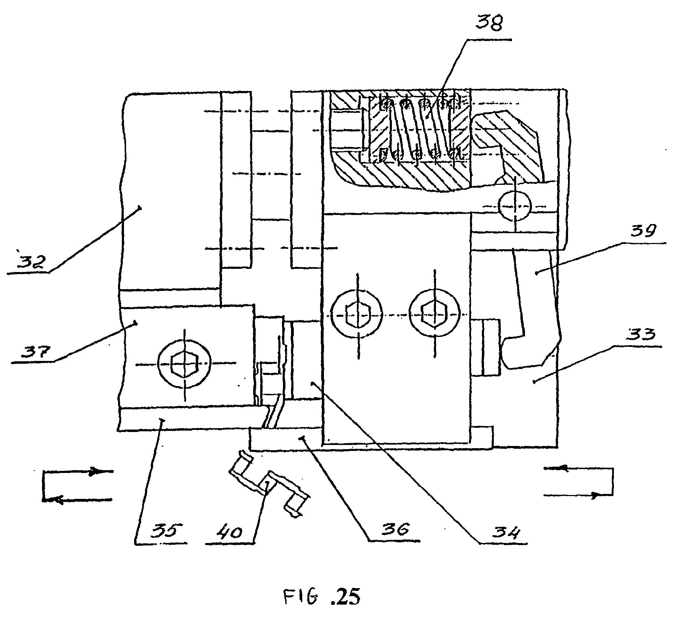

The device for chopping and forming a lock in the tangential expander by means of bending the ends of profile horizontal shelves (see Fig.25) comprises: movable bodies 32 and 33 of press tool unit, a spring-loaded clamping 34 and a tool for bending and cutting but namely the tool having: a knife-detent 35, knife 36, detent 37, spring 38 and a rocker 39. Besides, the knife-detent 35 and the knife 36 are made in the form of plates which are fastened to the detent 37 and to the spring-loaded clamping 34. Besides, the knife-detent 35 and the knife 36 may be resharpened and adjusted to the given size with respect to the detent 37 and the spring-loaded clamping 34.

The proposed device operates by the following manner. The spiral of profile 40 is fed in the device and into its area for bending and chopping. Further the profile 40 is pressed by means of spring-loaded clamping 34 to the detent 37 fixing a chopped part of the profile 40 on the beveled knife-detent 35. Further on motion of the movable bodies 32 and 33 towards one another on the knife-detent 35 the knife 36 bends the horizontal shelf of the profile 40 and chops off the tangential expander from the spiral of profile 40.

### Industrial Applicability

The present invention may find its wide-spread application in the propulsion engineering and, in particular, on design and production of compound piston rings, their components, but namely: the plate-like twisted rings, tangential expanders, serpentine springs as well as corresponding equipment for manufacturing of above-mentioned articles.

## Claims

1. A compound piston ring for internal combustion engine comprising plate-like twisted rings and a spring solid-bent tangential expander which are made of metallic bands of rectangular cross-section with rounded edges ***characterized in that*** a width **B** and **b** and thickness **H** and **h** of metallic bands used for manufacturing the plate-like rings and the tangential expanders are in the following correlations: **b/B** = 0,45 ± ± 0,15 and **h/H** = 0,85±0,15.

2. The ring as set forth in Claim 1 ***characterized in that*** end detents of the tangential expander are made in such a manner that they are inclined at angle α with respect to the radial supporting shelves and this angle α is varying in the range of 95°to 120°.

3. A method for manufacturing plate-like twisted rings for compound piston ring comprising the steps of: winding of spiral made of steel band, its basing on a mandrel of given diameter with the spiral fastening along end-walls, the spiral thermal fixing, the spiral polishing, chromium-plating and its cutting into the separate rings ***characterized in that*** after the step of polishing the spiral is taken away from the mandrel and the spiral surface is prepared (is cleaned, etched and degreased) before the step of chromium-plating, further the spiral is based on the mandrel of given diameter, the step of chromium-plating is carried out along the external diameter, further the spiral is taken away from the mandrel and is dehydrogenated at a temperature up to 250° C but before the step of spiral cutting into the separate rings the spiral is preliminarily based on a mandrel or in a sleeve of given diameters.

4. A method for manufacturing of the tangential expanders for compound piston ring comprising the steps of: forming coils of serpentine spring, thrust shoulders and a V-type profile, winding of spiral made of this profile and simultaneous the spiral hardening on the mandrel, a measuring spiral separating from the winding spiral, reloading the separated spiral on another mandrel and tempering the separated spiral with the subsequent step of the spiral chopping into the separate expanders with the simultaneous forming a lock device of the tangential expander by means of bending the ends of horizontal shelves of spiral profile coils ***characterized in that*** further after the step of forming serpentine spring coils the step of gradual decreasing of coils step value is carried out with the step of permanent fixing places of bend but the step of thrust shoulders forming is carried out with a subsequent decreasing coils of this step to a value which is no more than 5S, wherein the value S is the band width when the serpentine spring is formed of this band.

5. The method as set forth in Claim 4 ***characterized in that*** the profile along the step and a curvature of the winding spiral made of said profile are fixed on a rotating bush of necessary diameter in number which is no less than two coils in process of heating and cooling on hardening and at the same time a compact adjacency of profile to the bush in process of hardening and its separating with the travel of coils of spiral of profile in the axial direction along the rotating bush and the rotating supporting mandrel are implemented by means of flexible roller with leading linear velocity up to 50% relative to the bush and the supporting mandrel velocity and further the coils of profile spiral are freely moved in the axial direction along the bush and the supporting mandrel.

6. The method as set forth in Claim 4 ***characterized in that*** the hardened spiral of given length is separated and reloaded for subsequent tempering the step of which is simultaneously implemented with the steps of winding and hardening.

7. A device for manufacturing serpentine springs, comprising a body with profiling rollers mounted on spindles in said body, one of the rollers is provided with pins oriented in the radial direction, and a guide roller ***characterized in that*** said device is provided with an immovable cam-eccentric disposed inside of the roller with the pins and with mechanisms for a restraint of motion of the pins, said mechanisms are carried out in the form of copying guides disposed on the both sides from the guide roller in course of the band feeding, the surfaces of copying guides are equidistant to the cam-eccentric surface and the pins are made being capable of moving in the radial direction and are mounted being capable of engaging with the cam-eccentric and the mechanisms for their motion restraint.

8. The device for manufacturing a tangential expander profile and for its winding into spiral with the simultaneous step of its hardening comprising a body on which by means of bearings a rotating mandrel is mounted , a lever, on which a flexible roller is mounted with a friction coupling which is built into said roller and has a kinematical constraint with the rotating mandrel by means of unit of pinions, and a puller ***characterized in that*** a quick-detachable bush is made of heat isolating material and mounted on a rotating mandrel but the lever on which there is mounted a flexible roller is made rotatable and spring-loaded one and the puller is carried out with an end spiral surface having a step which is no less than the height h of winding spiral profile.

9. A device for chopping and forming a lock in the tangential expander, comprising movable bodies of press tool unit with bending and cutting tool for horizontal shelves bending and profile chopping mounted in said movable bodies, ***characterized in that*** the cutting tool made in the form of separate plates that are fastened to spring-loaded clamping and rest having a capability of adjusting with respect to the rest and clamping at the prescribed dimension.
